# EUROPEAN PATENT SPECIFICATION

(11) **EP 2 912 368 B1**
(45) Date of publication and mention of the grant of the patent: **13.12.2017**
(21) Application number: 13818796.8
(22) Date of filing: 15.10.2013
(51) Int. Cl.: F21V 3/02, F21V 3/04, F21V 5/00, F21W 131/103, F21Y 115/10

(54) **OPTICAL COVER FOR A LIGHT EMITTING MODULE**
OPTISCHE HÜLLE FÜR EIN LICHTEMITTIERENDES MODUL
COUVERCLE OPTIQUE POUR MODULE D'ÉMISSION DE LUMIÈRE

(30) Priority: 23.10.2012 US 201261717218 P
(43) Date of publication of application: 02.09.2015
(73) Proprietor: Philips Lighting Holding B.V., 5656 AE Eindhoven (NL)
(72) Inventor: SNIJKERS, Robertus Johannes Maria Mathilde, NL-5656 AE Eindhoven (NL); LI, Qian, NL-5656 AE Eindhoven (NL); BÄUMER, Stefan Michael Bruno, NL-5656 AE Eindhoven (NL); VAN KEMPEN, Frank Walterus Franciscus Marie, NL-5656 AE Eindhoven (NL)
(74) Representative: Verweij, Petronella Daniëlle
(86) International application number: PCT/IB2013/059362
(87) International publication number: WO 2014/064576

(56) References cited:
- EP-A1- 0 598 546
- EP-A1- 1 524 468
- EP-A1- 2 677 231
- EP-A2- 1 500 866
- WO-A1-2012/172510
- CN-Y- 201 106 805
- FR-A1- 2 935 459
- US-A1- 2010 277 926
- US-A1- 2012 014 116
- US-B1- 7 441 927

## Description

### FIELD OF THE INVENTION

The present invention relates to a bowl-shaped optical cover for a light-emitting module. Additionally, the present invention relates to a light-emitting module having a bowl-shaped optical cover.

### BACKGROUND OF THE INVENTION

Solid state light-sources, such as light-emitting diodes (LEDs), are increasingly used as illumination devices for a wide variety of lighting and signaling applications. One type of illumination devices suitable for outdoor application is a high flux light-emitting module. At least for some outdoor applications, such as illumination of roads, it is desirable to deliver a uniform light output and meet the requirement of optical distribution. Moreover, in cases where an outdoor LED module is used in combination with a reflector, the emitting area should be as small as possible. Typically, this means that the LEDs are positioned close to each other. However, the above condition is no guarantee that the requirements for uniformity and light distribution are automatically fulfilled. These requirements are particularly important for illumination of roads, since a less uniform light distribution may create darker spots on the road which can be detrimental for drivers and pedestrians. In addition, a less uniform light distribution at the light source may further require a use of a more complex optical system to meet recommendations relating to uniformity and light distribution at the road.

Several attempts have been made to meet the requirements for optical distribution and uniformity. For instance, WO2012/040414, discloses a shell integrator lens to erase or mitigate color and brightness artifacts from the optical system. The system includes two sets of micro lenses; one of them is located on the inner surface of the main optical element while the second set of micro lenses is located on the outer surface of the optical element. In particular, a micro lens on the inner surface is operatively coupled to a corresponding micro lens on the outer surface. Moreover, the light of all chips is mixed by the micro lenses in order to obtain a single light source.

Despite the activity in the field, there remains a need for an improved LED module which meets the requirements for uniformity and light distribution. In particular, it is desirable that a balance is kept between the size and number of components making up the LED module such that the cost are minimized in view of the production of the LED module.

US7441927B1 discloses a PAR lamp with a single electric light source, such as a LED, and a lens with lenticules arranged in a spiral pattern on an interior surface of a lens. EP1500866A2 discloses a PAR lamp formed with a highly domed lens. The inner or outer surface of the domed lens may include lenticules or other refractive optical features. EP0598546A1 discloses a meniscus lens with a smooth outer surface and a multiplicity of hexagonally shaped and spherically curved lenticules on an inner surface. EP1524468A1 discloses a lighting device with a reflector with an opening enclosed with a diaphragm whose surface is completely covered by micro lenses. CN201106805Y discloses a anti-glare lamp.

### SUMMARY OF THE INVENTION

In view of the above-mentioned and other drawbacks of the prior art, a general object of the present invention is to provide a bowl-shaped optical cover for an improved light-emitting module.

According to the present invention there is provided a light emitting module according to claim 1, where the light emitting module comprises a bowl-shaped optical cover. The bowl-shaped optical cover has an inner concave surface for facing a light source, and an outer convex surface for facing away from a light source. The bowl-shaped optical cover comprises a micro lenses array structure arranged on the inner surface of the optical cover for refracting light emitted from a light source. Moreover, the bowl-shaped optical cover comprises a macro lens structure formed between the micro lenses array structure and the outer convex surface of the optical cover. The macro lens structure has a thickness Z₁, wherein the thickness Z₁ is varied along the optical cover such that light is refracted from a thinner part towards a thicker part of the macro lens structure.

The term "micro lens" refers to a small lens, generally with a diameter less than a few millimeter, and often as small as 10 micrometers. This type of lens is commonly known within the industry, and generally makes use of a concave-convex surface to transmit lights with a certain wavelength. Micro lenses can be provided in form of an array, and may be arranged in either a one-dimensional or two-dimensional array. In the context of the present invention, micro lenses are arranged on the inner concave surface of the optical cover by a suitable method. For instance, the optical cover with the micro lenses array structure can be made by injection molding, where the micro-lens structure is created (inversed) in the mold.

The term " macro lens" refers to any other lens which is bigger than a micro lens, and most typically a lens corresponding to the entire cover. A macro lens may also be denoted a "normal" lens, and has dimensions typical in the order of 10 - 100 mm. One suitable material for a macro lens is glass. It is also envisaged that other materials may be used, e.g. transparent plastics. In this manner, the present invention proposes an optical cover which improves the luminous intensity distribution. In addition, the present invention is considered to have a positive impact on the luminance uniformity of a light source such as an array of solid state light-sources, e.g. LEDs.

In contrast to available prior art systems, which use one set of micro lenses on the inner suracce of the main optical element, and one set of micro lenses on the outer surface of the main optical element, the present invention provides a less complex technical solution with an array of micro lenses arranged solely on the inner concave surface of the optical cover. To this end, by the principle of the invention, it becomes possible not only to increase the luminance uniformity, but also to improve the luminous intensity distribution. Accordingly, there is provided a bowl-shaped optical cover for a light-emitting module which combines two functions.

Since the macro lens structure has a variation in thickness along the optical cover such that light is refracted from a thinner part towards a thicker part of the macro lens structure, lights from a solid state light-source is diffracted towards the thicker part of the optical cover. As such, the luminous intensity distribution is further improved compared to available prior art.

Moreover, since the present invention improves the luminous intensity distribution, it becomes possible to better cope with various technical specifications. As such, by the optical cover according to the present invention, a LED module can be provided which is compliant with different types of luminaire, while still ensuring that the overall performance of the luminaire is maintained. Accordingly, it is another object of the present invention to provide an optical cover for a light-emitting module which is more flexible.

Thereby, the present invention increases the number of options for suitable LEDs and, as a result, extends the design freedom for additional parts, such as protective covers to provide for electrical shielding.

Due to the enhanced technical effects, as mentioned above, it becomes possible to make use of a smaller sized light-emitting module inside the luminaire as well as to reduce the number of LEDs in the light-emitting module while maintaining a high uniformity. Accordingly, by the present invention, there is provided a light-emitting module which is relatively inexpensive to manufacture.

Uniformity of luminance is regarded as an important quality issue which addresses how evenly light is spread over an area. Luminance uniformity is especially important in outdoor applications, such as lighting for roadways, streets, parking facilities, parks, landscapes, footpaths, and bicycle paths. In other words, changes of contrasting high- and low-lit roadways segments may cause enormous discomfort for the eyes, leading to stress and tiredness and therefore jeopardizing road safety. Without being bound by any theory, it is appreciated that an improved light uniformity may allow people to perceive the environment continuously and without sudden breaks caused by dark spots. Further, a less uniform luminance distribution at the source requires a more complex optical system to achieve a uniform light distribution at the road. In this manner, luminance uniformity contributes to early anticipation when driving, smoother traffic flow and more relaxed drivers. Accordingly, as briefly mentioned above, it is yet another object of the present invention to provide a bowl-shaped optical cover for a light-emitting module which improves the luminance uniformity. According to the invention, the optical cover is formed by a base part and an apex part. In this context, the thickness Z₁ is smaller in the base part than in the apex part. The micro lenses array structure comprises curved micro lenses. By the provision that the micro lens has a curved shape, the uniformity is further improved. This is achieved since the micro lens has the function of mixing light by refraction on the inner surface of the micro lens. The curved shape can for instance be part of a sphere, ellipse or any other curved shape which is capable of providing the required refraction of light.

As mentioned above, for various embodiments when the micro lenses array structure comprises a plurality of micro lenses, each micro lens may be arranged by a centre point distance P from any of the other micro lenses. Thereby, an angle α is formed between a tangent plane T, which is formed at an intersection of two adjacent micro lenses, and the outer convex surface. Hence, the angle corresponds to the deviation between the tangent plane and the outer convex surface.

Typically, a light-emitting module requires different light mixing requirements along a longitudinal direction X and a transverse direction Y because of a difference in distance between the LEDs.

In order to fulfill this requirement, the light mixing must be independently adjusted in both dimensions. Hence, in various embodiments, a centre point distance P₁ between two micro lenses in the longitudinal direction X of the optical cover is different than a centre point distance P2 between two micro lenses in the transverse direction Y of the optical cover. In this manner, it becomes possible to separate the amount of mixing in the X-direction and the Y-direction to further improve the uniformity. As such, the light mixing in both dimensions can be adjusted independently.

According to the invention, there is provided a light-emitting module comprises a bowl-shaped optical cover according to claim 1. The light-emitting module further comprises a plurality of solid state light-sources arranged to emit lights towards the inner concave surface of the optical cover.

Solid state light-sources are light-sources in which light is generated through recombination of electrons and holes. Examples of solid state light-sources include light-emitting diodes (LEDs) and semiconductor lasers. The solid state light-source may advantageously be attached to a surface of a base structure. In one embodiment, the LEDs are placed in four rows, wherein each row contains 10 LEDs. However, the light-emitting module may have a different amount of LEDs, a different number of rows of LEDs, or different arrangement of LEDs as is apparent to the skilled person.

The present invention can be implemented in various luminaires. The luminaires may have other features, such as reflectors directing the light, an outer shell or housing for alignment and protection, and an electrical ballast or power supply. Depending on the characteristics of the luminaires and on the particular illumination needs, the luminaires may be mounted on a suitable support member, e.g a lamp-post. It is noted that the invention relates to all possible combinations of features recited in the claims.

### BRIEF DESCRIPTION OF THE DRAWINGS

This and other aspects of the present invention will now be described in more detail, with reference to the appended drawings showing embodiment(s) of the invention.
Fig. 1 schematically shows an exemplary application of the bowl-shaped optical cover according to various embodiments of the present invention, in the form of an optical cover arranged in a light-emitting module, the light-emitting module comprising a plurality of solid state light-sources;
Fig. 2a is a schematic perspective view of the bowl-shaped optical cover in fig. 1;
Fig. 2b shows a cut-out view of a part of the bowl-shaped optical cover in fig. 2;
Fig. 3a shows a view of two adjacent micro lenses of the bowl-shaped optical cover, including the radius R, the centre point distance P, the tangent plane T and the angle α;
Fig. 3b shows a view of the micro lenses array structure of the bowl-shaped optical cover, extending in the longitudinal direction X and the transverse direction Y;
Fig. 3c shows another view of two adjacent micro lenses of the bowl-shaped optical cover;
Fig. 3d shows yet another view of two adjacent micro lenses of the bowl-shaped optical cover;
Fig. 4 shows a cut-out view of the diffraction of a few light rays through a part of the bowl-shaped optical cover in order to illustrate the effect of the macro lens;
Fig. 5 shows a graph of the relative luminous intensity for the light-emitting module comprising the bowl-shaped optical cover according to the present invention.

As illustrated in the figures, the sizes of components and regions are exaggerated for illustrative purposes and, thus, are provided to illustrate the general structures of embodiments of the present invention. Like reference numerals refer to like elements throughout.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

In the following description, the present invention is mainly described with reference to a light-emitting module comprising a plurality of solid state light-sources. It should, however, be noted that this by no means limits the scope of the invention, which is equally applicable to, for example, light-emitting modules with various types of light-sources and other configurations of the solid state light-sources.

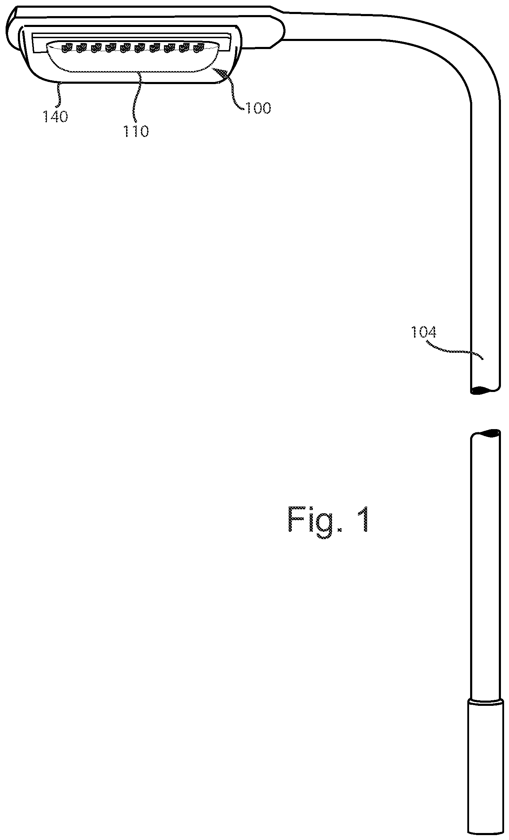

Fig. 1 schematically illustrates an exemplary application for embodiments of the bowl-shaped optical cover to be used in a light-emitting module according to the present invention, in the form of a light-emitting module arranged in a lamp-post 104 along a road. The light-emitting module may also be intended as daylight replacement and should then emit uniform white light. Within the light-emitting module 100, there is provided a bowl-shaped optical cover 110 according to one embodiment of the present invention. The light-emitting module 100 is preferably covered by an additional protective shell or housing 140 in order to protect the bowl-shaped optical cover 110 and the light-emitting module 100 from damage and/or heavy weather. The protective shell or housing 140 is preferably made of a transparent material and may be made of any suitable material, e.g. glass or plastic.

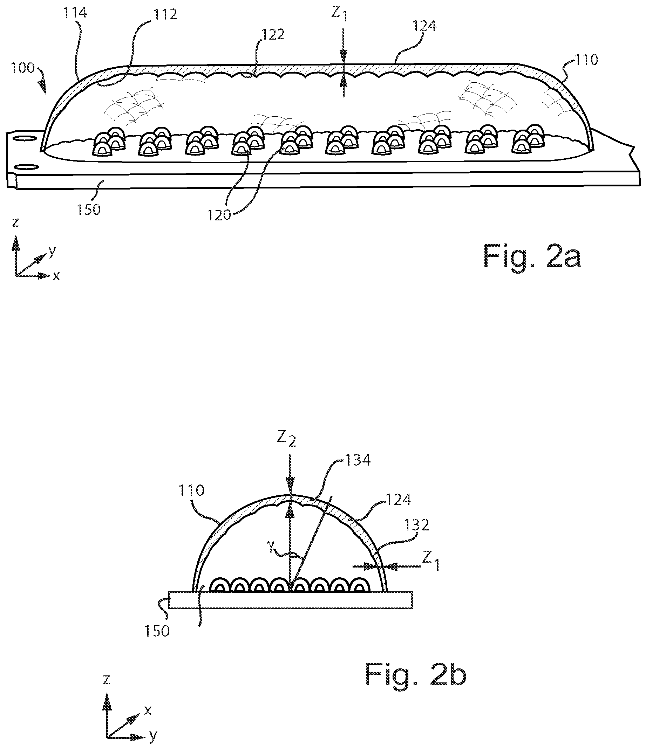

With reference to fig. 2a, which is a schematic view of the light emitting module 100 and the bowl-shaped optical cover 110 in fig. 1, the light-emitting module 100 here comprises a base structure 150 configured for attachment to a lamp-post, ensuring that the light-emitting module 100 is securely attached so as to avoid any malfunction of the light-emitting module 100. As such, the base structure 150 provides the necessary stability to the light-emitting module 100. The base structure 150 may therefore comprise mounting means for mounting the light-emitting module 100 on a lamp-post. For instance, the base structure 150 including the light-emitting module 100 can be mounted to the lamp-post 104 by means of screws or bolts, and may therefore be provided with attachment holes, as is illustrated in fig. 2.

It should be noted that fig. 2a is a simplified illustration of the light-emitting module 100 in fig 1, and that various structures, such as electrical connections to the light-emitting module and structures for mounting the light-emitting module are not explicitly indicated. Such structures can, however, be provided in many different ways apparent to one skilled in the art.

In addition, the light-emitting module 100 comprises a plurality of solid state light-sources 120. The solid state light-sources 120 may be arranged on the base structure 150 and may advantageously be arranged in a two-dimensional array. In one embodiment, the solid state light-sources are provided in the form of LEDs. A diffusing sheet (or remote phosphor film) may be arranged in front of the solid state light-sources to diffuse light emitted by the light-emitting module. In addition, or alternatively, the solid state light-sources may be arranged on a printed circuit board (PCB), which is typically an integrated part of the base structure 150. In another embodiment, the PCB is a separate part of the light-emitting module, which is attached to the base structure by any suitable means, e.g. by an adhesive.

The light-emitting module 100 and the bowl-shaped optical cover 110 will now be described in greater detail with reference to figs. 2a and 2b. As is schematically indicated in fig. 2a, the light-emitting module 100 comprises a bowl-shaped optical cover 110. The bowl-shaped optical cover 110 is attached to the base structure 150, enclosing the solid state light-sources 120. The bowl-shaped optical cover 110 has an inner concave surface 112 for facing a light source, and an outer convex surface 114 for facing away from the light source, i.e. the solid state light-sources 120. As illustrated in fig. 2, which is a cross-sectional view of the shape of the optical cover in the longitudinal direction X and the thickness direction Z, the shape resembles half of a circle. In other words, the shape of the optical cover has an extension in the longitudinal direction X, an extension in the transverse direction Y and an extension in the thickness direction Z such that the outer surface of the optical cover forms a convex surface. For example, the extension in the longitudinal direction X is between 50 to 80 mm, the extension in the transverse direction Y is between 15 - 30 mm, and the extension in the thickness direction Z is between 5 - 25 mm. It is to be noted that the final shape of the optical cover should be adapted to the arrangement of the solid state light-sources 120 and/or the shape of the light-emitting module 100 it is placed on. Preferably, the optical cover is formed of a single material layer. It is also contemplated that the optical cover can be made of several layers of the same material.

In all of the embodiments of the present invention, the bowl-shaped optical cover 110 comprises a micro lenses array structure 122 arranged on the inner surface 112 of the optical cover 110 for refracting light emitted from a light source. In various embodiments, the micro lenses array structure comprises micro lenses. Typically, the micro lenses array structure comprises a plurality of micro lenses. As can been seen from the embodiment shown in figures 2a and 2b, and as explained above, the micro lenses array structure here comprises spherical micro lenses. By the provision that the optical cover 110 comprises a micro lens having a spherical shape, the uniformity is improved. This is achieved since the micro lens has the function of mixing light by refraction on the inner surface of the micro lens.

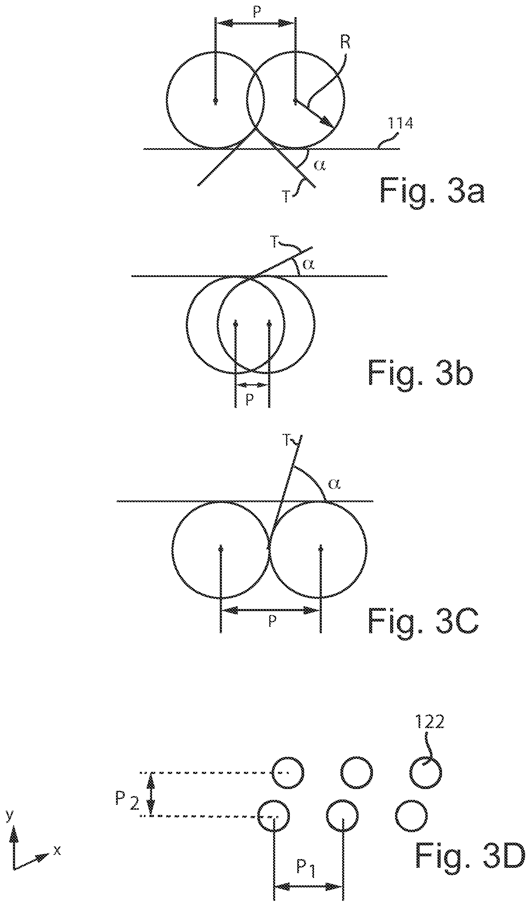

In this context, the amount of refraction is determined by the maximum angle α of each micro lens. With reference to fig. 3a - 3d, the angle α is determined by a radius R of each spherical lens and a centre point distance P of each lens. Hence, in this context, the radius R refers to the radius of the curvature of the micro lens surface. That is, the surface of each micro lens is part of a sphere, as is illustrated in e.g. fig. 2b, wherein the sphere has the radius R. Hence, each micro lens is here spherical and defined by the radius R. Although a reference is made to the radius R of the micro lens, it is also envisaged that the micro lens can be defined by any other suitable parameter describing the curvature of the micro lens. Typically, the radius R and the size of the micro lens determine the strength of the micro lens. In this respect, it is apparent to the skilled in the art that the range of the radius R is determined by the chosen size of the micro lenses and the required effect.

In some embodiments, as illustrated in fig. 3a, the length of the radius R of each micro lens is constant, i.e. the length of the radius is the same for all micro lenses. However, in other embodiments, the length of the radius R of a first micro lens may be different from the length of the radius R of a second micro lens. In yet another embodiment, the radius R of each micro lens in the micro lenses array structure 122 is less than 10 mm. In one specific embodiment, the length of the radius R is 2.6 mm. Although not visible from the figures, it can also be readily understood that for a given centre point distance P, due to the geometry of the micro lenses, a small radius R corresponds to a large angle α. Correspondingly, a large radius R corresponds to a small angle α.

The angle α refers to the angle between a tangent plane T, which is formed at an intersection of two adjacent micro lenses, and the outer convex surface 114. As can be seen from figure 3b, a small centre point distance P corresponds to a small angle α. As can be seen from figure 3c, a large centre point distance P corresponds to a large angle α. Accordingly, the angle α corresponds to the deviation between the tangent plane T and the outer convex surface 114. It is to be noted that in this particular point of intersection, between the tangent plane T and the outer convex surface 114, the outer convex surface 114 is regarded as a flat surface.

In one embodiment according to the present invention, as illustrated in fig. 3d, a centre point distance P₁, which is the distance between two micro lenses in a longitudinal direction X of the bowl-shaped optical cover 110, is different than a centre point distance P₂, which is the distance between two micro lenses in a transverse direction Y of the bowl-shaped optical cover 110. In this manner, it becomes possible to separate the amount of mixing in the X-direction and the Y-direction to further improve the uniformity. For instance, the centre point distance P₁ is between 3 to 10 mm and the centre point distance P₂ is between 3 to 15 mm. It is to be noted that fig. 3d depicts a simplified view of the centre point distance P between two micro lenses. Hence, in reality, the micro lenses are typically arranged much closer to each other in the X-direction and the Y-direction, and often in a pattern as is shown in fig. 2b .

Without being bound by any theory, at shallow angles, the light-emitting surface becomes smaller and therefore less mixing is required. As such, the center point distance P is varied with the angular position of the micro lens along the surface of the optical cover.

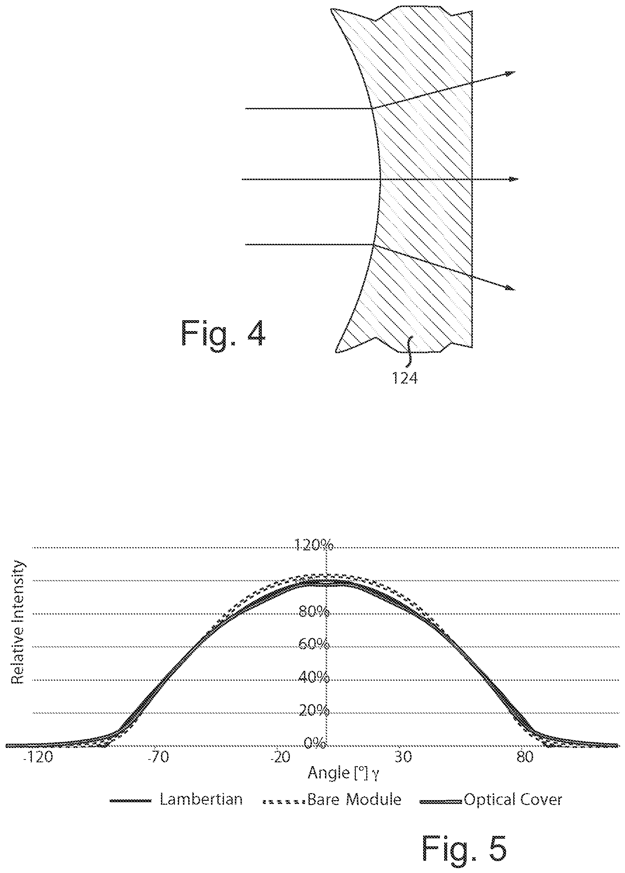

Referring again to fig. 2a and 2b, the bowl-shaped optical cover 110 further comprises a macro lens structure 124 formed between the micro lenses array structure 122 and the outer convex surface 114 of the bowl-shaped optical cover 110. As illustrated more clearly in figs. 2b, the macro lens structure 124 has a thickness Z₁. The thickness Z₁ is varied along the optical cover 110 such that light is refracted from a thinner part towards a thicker part of the macro lens structure 124. That is to say, the thickness varies from thickness Z₁ to Z₂. In this context, and as illustrated in Figure 2b, the thickness Z₁ is varied along an angle γ. From Figure 2b, it is also evident that the angle γ is defined as the angle between the surface normal of the surface containing the solid state light-sources 120, that is the surface of the base structure 150. The angle γ has an extension from 0° to ±90°. Hence, 0° is perpendicular to the base structure 150, and 90° is parallel to the base structure 150. In one embodiment, the thickness Z₁ is smaller in a base part 132 of the optical cover 110 than in an apex part 134 of the optical cover 110. This is illustrated in Figure 2b, i.e. the base part 132 of the optical cover 110 has a thickness Z₁ which is smaller than the thickness Z₂ of the apex part 134 of the optical cover 110. The technical effect of the macro lens structure 124 is also illustrated in Figure 4, which shows how light is refracted towards a thicker part of the optical cover 110. As such, light from a solid state light-source is diffracted towards the thicker part of the optical cover 110. Accordingly, it becomes possible to further improve the luminous intensity distribution. In other embodiments, the thickness Z₁ is varied along the angle γ. Regarding Figure 4, it is to be noted that the refraction of the light rays at the inner surface is exaggerated. Moreover, in practice, there would also be refraction at the outer surface.

To this end, the thickness variation of the macro lens 124 mainly influences the luminous intensity distribution, while the micro lenses array structure 122 mainly influences the luminance uniformity. It is to be noted that since the present invention provides two functions, it is not possible to completely decouple the above-mentioned technical effects.

As mentioned above, the uniformity is significantly improved over all solid state light-sources by the bowl-shaped optical cover 110. Yet, it may be possible that a few LEDs arranged on the outer regions of the base structure can be easily distinguished since the optical cover is closer to the LEDs in outer regions due to the fact that the optical cover is bowl-shaped. That is to say, due to the curvature of the optical cover, a distance between the optical cover and the LEDs arranged on the base structure is smaller at a point S, at the apex part of the optical cover, compared to a distance at a point Q, at the base part of the optical cover.

Referring to Figure 5, the relative luminous intensity for the light-emitting module 100 comprising the bowl-shaped optical cover 110 is shown. In this context, the term "relative" refers to the luminous intensity relative to the maximum value of the Lambertian luminous distribution. In this figure, the relative luminous intensity is depicted both for a light-emitting module including the optical cover and for a light-emitting module without any optical cover. These two examples are depicted in view of the Lambertian luminous distribution. The angle refers to the angle γ, as illustrated in fig. 2b. The relative luminous intensity for a light-emitting module without an optical cover is shown by the dotted line, the relative luminous intensity for a light-emitting module including an optical cover is shown by the white line, and the lambertian relative luminous intensity is shown by the continuous line. The lambertian luminous distribution has maximum luminous intensity at 0°, which drops to 0 at -90° and +90°. For all examples, the relative luminous intensity exhibits a large spread, with a peak relative luminous intensity at an angle 0°, and minimal relative luminous intensity at angles - 90° and 90°. As is shown in the flow-chart in fig. 5, when a light-emitting module is used without an optical cover, there is an excessive amount of light in the first zone, i.e. 0° - 41.4°, and an insufficient amount of light in the fourth zone, i.e. 75.5° - 90°. However, when a light-emitting module including a bowl-shaped optical cover is used, the measured relative luminous intensity is improved for all zones, and a more even luminous intensity distribution is obtained which is closer to the lambertian relative luminous intensity. In particular, by the present invention, it is appreciated that in all zones, the relative luminous intensity is within 4% of the lambertian relative luminous intensity. The above-mentioned diagram is illustrated for exemplary purposes, and it is to be noted that some variations may exist depending on the final shape and thickness of the bowl-shaped optical cover.

It is noted that by means of providing a light-emitting module with a bowl-shaped optical cover, it may become impractical to reduce the amount of LEDs by removing a random LED without creating a gap. In practice, a LED is removed at a corner position of the LED base structure, or redistributed across the surface. Nevertheless, by the present invention it is still possible to provide an improved uniformity compared to an original luminance distribution without the optical cover. This is due to the fact that with the optical cover, the luminance area of each LED is increased to about the size of the LED pitch. Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A light emitting module (100) comprising:
- a bowl-shaped optical cover (110); a base structure 150;
- a plurality of solid state light sources (120) attached to the base structure (150) and arranged to emit lights towards an inner concave surface (112) of the bowl-shaped optical cover (110), said optical cover (110) further having an outer convex surface (114) for facing away from the plurality of solid state light sources, said optical cover (110) comprising:
- a micro lenses array structure (122) arranged on the inner surface (112) of the optical cover (110) for refracting light emitted from a light source and comprising curved micro lenses; and
- a macro lens structure (124) formed between the micro lenses array structure (122) and the outer convex surface (114) of the optical cover (110), said macro lens structure (124) having a thickness (Z1), wherein the thickness (Z1) is varied along the optical cover (110) such that light is refracted from a thinner part towards a thicker part of the macro lens structure (124),
wherein a centre point distance (P1) between two micro lenses in a longitudinal direction (X) of said optical cover (110) is different than a centre point distance (P2) between two micro lenses in a transverse direction (Y) of said optical cover (110), **characterized in that** the optical cover (110) is formed by a base part (132) and an apex part (134), the thickness (Z1) is smaller in the base part (132) than in the apex part (134), and **in that** the bowl-shaped optical cover (110) is elongated in the longitudinal direction (X).

2. The light emitting module (100) according to claim 1, wherein the optical cover (110) is formed of a single material layer.

3. The light emitting module (100) according to claim 1, wherein each micro lens is spherical and defined by a radius (R).

4. The light emitting module (100) according to claim 3, wherein the length of the radius (R) of each micro lens is the same for all micro lenses.

5. The light emitting module (100) according to claim 3 or 4, wherein the length of the radius (R) of each micro lens in the micro lenses array structure (122) is less than 10 mm.

6. The light emitting module (100) according to claims 1 and 4 to 5, wherein the micro lenses array structure (122) comprises a plurality of micro lenses, and wherein each micro lens is arranged by a centre point distance (P) from any of the other micro lenses, whereby an angle α is formed between a tangent plane (T), at an intersection of two adjacent micro lenses, and the outer convex surface (114).

7. The light emitting module (100) according to any of the preceding claims, wherein the bowl-shaped optical cover (110) has an extension in a longitudinal direction (X) between 50mm and 80mm, an extension in a transverse direction (Y) between 15mm and 30mm, and an extension in a thickness direction (Z) between 5mm and 25mm.

## Patentansprüche

1. Lichtemittierendes Modul (100), umfassend:
- eine schalenförmige optische Abdeckung (110);
- eine Basisstruktur (150);
- eine Vielzahl von Festkörperlichtquellen (120), die an der Basisstruktur (150) befestigt sind und angeordnet sind, um Lichter in Richtung einer konkaven Innenfläche (112) der schalenförmigen optischen Abdeckung (110) zu emittieren, wobei die besagte optische Abdeckung (110) weiter eine konvexe Außenfläche (114) aufweist, um sich von der Vielzahl von Festkörperlichtquellen abzuwenden, wobei die besagte optische Abdeckung (110) umfasst:
- eine Mikrolinsen-Anordnungsstruktur (122), die an der Innenfläche (112) der optischen Abdeckung (110) angeordnet ist, um das von einer Lichtquelle emittierte Licht zu brechen, und gekrümmte Mikrolinsen umfassend; und
- eine Makrolinsenstruktur (124), die zwischen der Mikrolinsen-Anordnungsstruktur (122) und der konvexen Außenfläche (114) der optischen Abdeckung (110) gebildet wird, wobei die besagte Makrolinsenstruktur (124) eine Dicke (Z1) aufweist, wobei die Dicke (Z1) entlang der optischen Abdeckung (110) unterschiedlich ist, sodass Licht von einem dünneren Teil in Richtung eines dickeren Teils der Makrolinsenstruktur (124) gebrochen wird,
wobei sich ein Mittelpunktabstand (P1) zwischen zwei Mikrolinsen in eine Längsrichtung (X) der besagten optischen Abdeckung (110) von einem Mittelpunktabstand (P2) zwischen zwei Mikrolinsen in eine querlaufende Richtung (Y) der besagten optischen Abdeckung (110) unterscheidet,
**dadurch gekennzeichnet, dass**
die optische Abdeckung (110) durch ein Basisteil (132) und ein Scheitelteil (134) gebildet wird, die Dicke (Z1) im Basisteil (132) kleiner ist, als im Scheitelteil (134), und dadurch, dass
die schalenförmige optische Abdeckung (110) in Längsrichtung (X) ausgestreckt ist.

2. Lichtemittierendes Modul (100) nach Anspruch 1, wobei die optische Abdeckung (110) aus einer einzigen Materialschicht gebildet wird.

3. Lichtemittierendes Modul (100) nach Anspruch 1, wobei jede Mikrolinse kugelförmig ist und durch einen Radius (R) definiert wird.

4. Lichtemittierendes Modul (100) nach Anspruch 3, wobei die Länge des Radius (R) einer jeden Mikrolinse dieselbe für alle Mikrolinsen ist.

5. Lichtemittierendes Modul (100) nach Anspruch 3 oder 4, wobei die Länge des Radius (R) einer jeden Mikrolinse in der Mikrolinsen-Anordnungsstruktur (122) kleiner als 10 mm ist.

6. Lichtemittierendes Modul (100) nach den Ansprüchen 1 und 4 bis 5, wobei die Mikrolinsen-Anordnungsstruktur (122) eine Vielzahl von Mikrolinsen umfasst, und wobei jede Mikrolinse in einem Mittelpunktabstand (P) von jeder der anderen Mikrolinsen angeordnet ist, wobei ein Winkel α zwischen einer Tangentialebene (T) an einem Schnittpunkt von zwei angrenzenden Mikrolinsen, und der konvexen Außenfläche (114) gebildet wird.

7. Lichtemittierendes Modul (100) nach einem der vorstehenden Ansprüche, wobei die schalenförmige optische Abdeckung (110) eine Erweiterung in eine Längsrichtung (X) zwischen 50 mm und 80 mm, eine Ausdehnung in eine querlaufende Richtung (Y) zwischen 15 mm und 30 mm, und eine Ausdehnung in eine Dickenrichtung (Z) zwischen 5 mm und 25 mm aufweist.

## Revendications

1. Module luminescent (100), comprenant :
- un couvercle optique en forme de bol (110) ;
- une structure de base (150) ;
- une pluralité de sources lumineuses à semi-conducteur (120) fixées à la structure de base (150) et agencées pour émettre des lumières vers une surface concave intérieure (112) du couvercle optique en forme de bol (110), ledit couvercle optique (110) possédant en outre une surface convexe extérieure (114) destinée à être tournée à l'opposé de la pluralité de sources lumineuses à semi-conducteur, ledit couvercle optique (110) comprenant :
- une structure à matrice de microlentilles (122) agencée sur la surface intérieure (112) du couvercle optique (110) pour réfracter de la lumière émise d'une source lumineuse et comprenant des micro lentilles incurvées ; et
- une structure à macro lentille (124) formée entre the structure à matrice de microlentilles (122) et la surface convexe extérieure (114) du couvercle optique (110), ladite structure à macrolentille (124) possédant une épaisseur (Z1), dans lequel l'épaisseur (Z1) varie le long du couvercle optique (110) de telle sorte que de la lumière soit réfractée à partir d'une partie plus mince vers une partie plus épaisse de la structure à macro lentille (124),
dans lequel une distance de point central (P1) entre deux micro lentilles dans une direction longitudinale (X) dudit couvercle optique (110) est différente d'une distance de point central (P2) entre deux micro lentilles dans une direction transversale (Y) dudit couvercle optique (110),
**caractérisé en ce que**
le couvercle optique (110) est formé par une partie de base (132) et une partie de sommet (134), l'épaisseur (Z1) est plus petite dans la partie de base (132) que dans la partie de sommet (134), et
**en ce que** le couvercle optique en forme de bol (110) est allongé dans la direction longitudinale (X).

2. Module luminescent (100) selon la revendication 1, dans lequel le couvercle optique (110) est formé d'une couche de matériau unique.

3. Module luminescent (100) selon la revendication 1, dans lequel chaque microlentille est sphérique et définie par un rayon (R).

4. Module luminescent (100) selon la revendication 3, dans lequel la longueur du rayon (R) de chaque microlentille est la même pour toutes les microlentilles.

5. Module luminescent (100) selon la revendication 3 ou 4, dans lequel la longueur du rayon (R) de chaque microlentille dans la structure à matrice de microlentilles (122) est inférieure à 10 mm.

6. Module luminescent (100) selon les revendications 1 et 4 à 5, dans lequel la structure à matrice de microlentilles (122) comprend une pluralité de microlentilles, et dans lequel chaque micro lentille est agencée selon une distance de point central (P) à partir de l'une quelconque des autres micro lentilles, moyennant quoi un angle α est formé entre un plan tangent (T), à une intersection de deux microlentilles adjacentes, et la surface convexe extérieure (114).

7. Module luminescent (100) selon l'une quelconque des revendications précédentes, dans lequel le couvercle optique en forme de bol (110) présente une étendue dans une direction longitudinale (X) entre 50 mm et 80 mm, une étendue dans une direction transversale (Y) entre 15 mm et 30 mm, et une étendue dans une direction d'épaisseur (Z) entre 5 mm et 25 mm.
